# EUROPÄISCHE PATENTSCHRIFT

(11) **EP 2 510 267 B1**
(45) Veröffentlichungstag und Bekanntmachung des Hinweises auf die Patenterteilung: **11.11.2015**
(21) Anmeldenummer: 10805763.9
(22) Anmeldetag: 23.11.2010
(51) Int. Cl.: F16K 15/14

(54) **RÜCKSCHLAGVENTIL**
CHECK VALVE
SOUPAPE DE RETENUE

(30) Priorität: 09.12.2009 DE 102009057649
(43) Veröffentlichungstag der Anmeldung: 17.10.2012
(73) Patentinhaber: Magna Powertrain Hückeswagen GmbH, 42499 Hückeswagen (DE)
(72) Erfinder: OTSUKA, Noriyuki, 41460 Neuss (DE); WALDER, Marcel, 42499 Hückeswagen (DE); RACZKO, Marek, 42369 Wuppertal (DE); FREIBURG, Alexander, 59846 Sundern-Amecke (DE)
(74) Vertreter: Rausch, Gabriele
(86) Internationale Anmeldenummer: PCT/DE2010/001374
(87) Internationale Veröffentlichungsnummer: WO 2011/069477

(56) Entgegenhaltungen:
- EP-A1- 0 732 301
- FR-A- 1 001 055
- GB-A- 2 452 139
- US-A- 4 204 555

## Beschreibung

Die Erfindung betrifft ein Rückschlagventil mit einer Ventilmembran, die einen schirmartigen Schließkörper umfasst, der in einer Schließstellung so an einem Gehäusekörper anliegt, dass der Schließkörper einen Mediumdurchtritt durch in dem Ventilkörper vorgesehene Durchgangslöcher verhindert, wobei der Schließkörper in einer Öffnungsstellung von dem Gehäusekörper abhebt, um den Durchtritt eines Mediums durch die Durchgangslöcher zu ermöglichen. Die Erfindung betrifft des Weiteren einen Pumpenstutzen mit einem derartigen Rückschlagventil. Darüber hinaus betrifft die Erfindung eine Vakuumpumpe, insbesondere zum Erzeugen eines Unterdrucks in einem Bremskraftverstärker eines Kraftfahrzeugs, mit einem derartigen Pumpenstutzen.

Aus der EP0732301A1 ist ein Rückschlagventil bekannt, das eine Ventilmembran und einen schirmartigen Schließkörper umfasst, wobei der Schließkörper in der Öffnungsstellung und/oder der Schließstellung an mindestens einer Stelle zwischen einem Ventilkörper und einem Gehäusekörper eingeklemmt ist. Allerdings wird in dieser Ausführung keine Vorkehrung für die Reduktion von Geräuschentwicklung getroffen.

Aufgabe der Erfindung ist es, ein Rückschlagventil mit einer Ventilmembran, die einen schirmartigen Schließkörper umfasst, der in einer Schließstellung so an einem Gehäusekörper anliegt, dass der Schließkörper einen Mediumdurchtritt durch in dem Ventilkörper vorgesehene Durchgangslöcher verhindert, wobei der Schließkörper in einer Öffnungsstellung von dem Gehäusekörper abhebt, um den Durchtritt eines Mediums durch die Durchgangslöcher zu ermöglichen, im Hinblick auf eine unerwünschte Geräuschentwicklung im Betrieb des Rückschlagventils zu verbessern.

Die Aufgabe ist bei einem Rückschlagventil mit einer Ventilmembran, die einen schirmartigen Schließkörper umfasst, der in einer Schließstellung so an einem Gehäusekörper anliegt, dass der Schließkörper einen Mediumdurchtritt durch in dem Ventilkörper vorgesehene Durchgangslöcher verhindert, wobei der Schließkörper in einer Öffnungsstellung von dem Gehäusekörper abhebt, um den Durchtritt eines Mediums durch die Durchgangslöcher zu ermöglichen, dadurch gelöst, dass der Schließkörper in der Öffnungsstellung und/oder Schließstellung an mindestens einer Stelle zwischen dem Ventilkörper und einem Gehäusekörper eingeklemmt ist. Durch eine definierte Fixierung des Schließkörpers an dem Ventilkörper wird die Bewegungsfreiheit der Ventilmembran gezielt eingeschränkt. Dadurch kann eine unerwünschte Geräuschentwicklung, die im Betrieb des Rückschlagventils durch die Ventilmembran verursacht wird, deutlich reduziert oder sogar ganz eliminiert werden. Durch das definierte Einklemmen des Schließkörpers kann dessen Schwingungsamplitude gedämpft werden.

Dabei ist das Rückschlagventil dadurch gekennzeichnet, dass der Schließkörper in der Öffnungsstellung und/oder Schließstellung so zwischen dem Ventilkörper und dem Gehäusekörper eingeklemmt ist, dass der Schließkörper in der Öffnungsstellung eine in Umfangsrichtung unebene Gestalt einnimmt. Durch die in Umfangsrichtung unebene Gestalt verschiebt sich die von dem Schließkörper verursachte Geräuschfrequenz. Darüber hinaus kann der Schalldrückpegel der Ventilmembran durch die in Umfangsrichtung unebene Gestalt reduziert werden. Durch das Einklemmen verformt sich der Schließkörper beim Öffnen anders als ohne Einklemmen. Der Schließkörper verformt sich insbesondere in Umfangsrichtung ungleichmäßig.

Ein weiteres bevorzugtes Ausführungsbeispiel des Rückschlagventils ist dadurch gekennzeichnet, dass der Schließkörper in der Öffnungsstellung und/oder Schließstellung so zwischen dem Ventilkörper und dem Gehäusekörper eingeklemmt ist, dass die Schwingungsamplitude des Schließkörpers in der Öffnungsstellung insbesondere lokal herabgesetzt wird. Die daraus entstehende Geräuschreduzierung macht sich bemerkbar in einer Senkung des Schalldruckpegels, einer Amplitudensenkung und einer Frequenzverlagerung des unerwünschten Geräuschs. Bei dem Geräusch handelt es sich vorzugsweise um ein Pfeifgeräusch.

Ein weiteres bevorzugtes Ausführungsbeispiel des Rückschlagventils ist dadurch gekennzeichnet, dass an dem Ventilkörper mindestens ein Klemmvorsprung vorgesehen ist, an dem eine Klemmfläche für den Schließkörper ausgebildet ist, an welcher der Schließkörper sowohl in seiner Öffnungsstellung als auch in seiner Schließstellung anliegt. Der Klemmvorsprung kann im Wesentlichen die Gestalt eines geraden Kreiszylinders aufweisen, der an seinem freien Ende eine Abschrägung aufweist, welche die Klemmfläche darstellt. Alternativ oder zusätzlich kann der beziehungsweise ein weiterer Klemmvorsprung am Schließkörper selbst ausgebildet sein. Vorzugsweise ist der Schließkörper sowohl in der Öffnungs- als auch in der Schließstellung zwischen dem Gehäusekörper und dem Ventilkörper eingeklemmt.

Ein weiteres bevorzugtes Ausführungsbeispiel des Rückschlagventils ist dadurch gekennzeichnet, dass der Klemmvorsprung einstückig mit dem Ventilkörper verbunden ist. Vorzugsweise sind mehrere Klemmvorsprünge an dem Ventilkörper diametral angeordnet.

Ein weiteres bevorzugtes Ausführungsbeispiel des Rückschlagventils ist dadurch gekennzeichnet, dass der Ventilkörper mit dem Klemmvorsprung als Spritzgussteil aus Kunststoff gebildet ist. Der Ventilkörper ist vorzugsweise zusammen mit dem Schließkörper in einen Pumpenstutzen einer Vakuumpumpe integriert.

Ein weiteres bevorzugtes Ausführungsbeispiel des Rückschlagventils ist dadurch gekennzeichnet, dass der Ventilkörper radial außerhalb des Klemmvorsprungs ein Langloch aufweist. Das Langloch ermöglicht in der Öffnungsstellung des Schließkörpers den Durchtritt eines Mediums. Vorzugsweise sind mehrere Langlöcher, insbesondere gleichmäßig, über einen Umfang des Ventilkörpers verteilt. Es ist jedoch nicht jedem Langloch ein Klemmvorsprung zugeordnet.

Ein weiteres bevorzugtes Ausführungsbeispiel des Rückschlagventils ist dadurch gekennzeichnet, dass das Langloch die Gestalt eines Kreisbogens aufweist. Der Klemmvorsprung ist vorzugsweise, in Umfangsrichtung betrachtet, in der Mitte des Kreisbogens des zugehörigen Langlochs angeordnet.

Die Erfindung betrifft des Weiteren einen Pumpenstutzen mit einem vorab beschriebenen Rückschlagventil. Der Ventilkörper ist vorzugsweise zusammen mit dem Schließkörper in dem Pumpenstutzen montiert. Um die Montage zu vereinfachen, kann der Ventilkörper durch eine Clipsverbindung so in dem Pumpenstutzen montiert werden, dass der Schließkörper beim Einclipsen des Ventilkörpers in den Pumpenstutzen zwischen dem Ventilkörper und dem Gehäusekörper eingeklemmt wird.

Die Erfindung betrifft des Weiteren eine Vakuumpumpe, insbesondere zum Erzeugen eines Unterdrucks in einem Bremskraftverstärker eines Kraftfahrzeugs, mit einem vorab beschriebenen Pumpenstutzen. Der Pumpenstutzen ist mit dem Gehäusekörper in eine entsprechende Aufnehmung der Vakuumpumpe montiert, vorzugsweise eingeclipst. Der Gehäusekörper des Pumpenstutzens kann auch in eine entsprechende Aufnahmeöffnung der Vakuumpumpe eingeschraubt oder eingepresst sein.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine Explosionsdarstellung eines Pumpenstutzens mit einem erfindungsgemäßen Rückschlagventil;
- Figur 2: einen Ventilkörper des Rückschlagventils aus Figur 1 in der Vorderansicht;
- Figur 3: den Ventilkörper aus Figur 2 in der Seitenansicht;
- Figur 4: einen ähnlichen Ventilkörper wie in Figur 2 gemäß einem zweiten Ausführungsbeispiel in der Vorderansicht;
- Figur 5: den Ventilkörper aus Figur 4 in der Seitenansicht und
- Figur 6: den Pumpenstutzen aus Figur 1 im Längsschnitt.

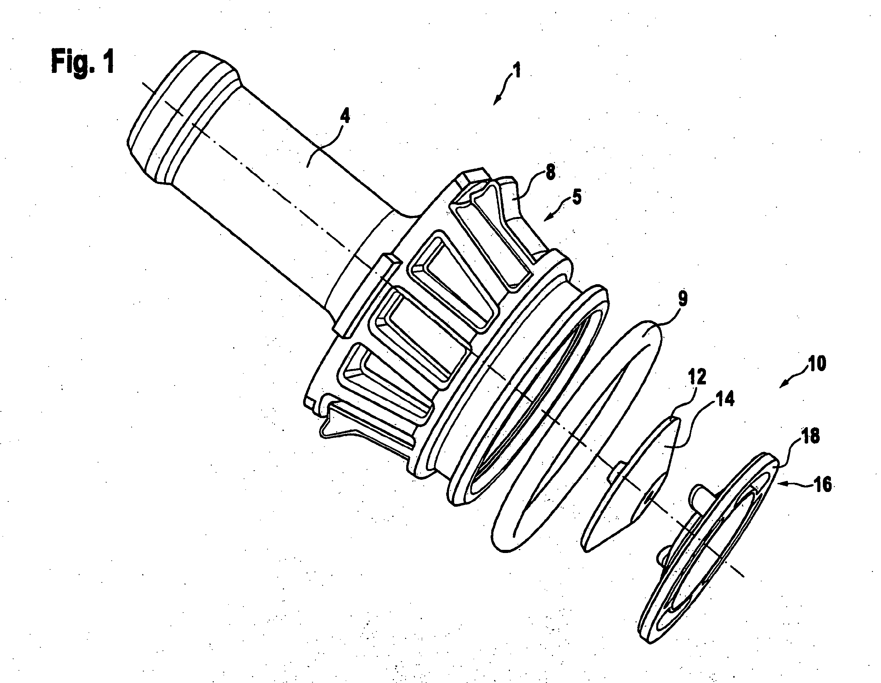

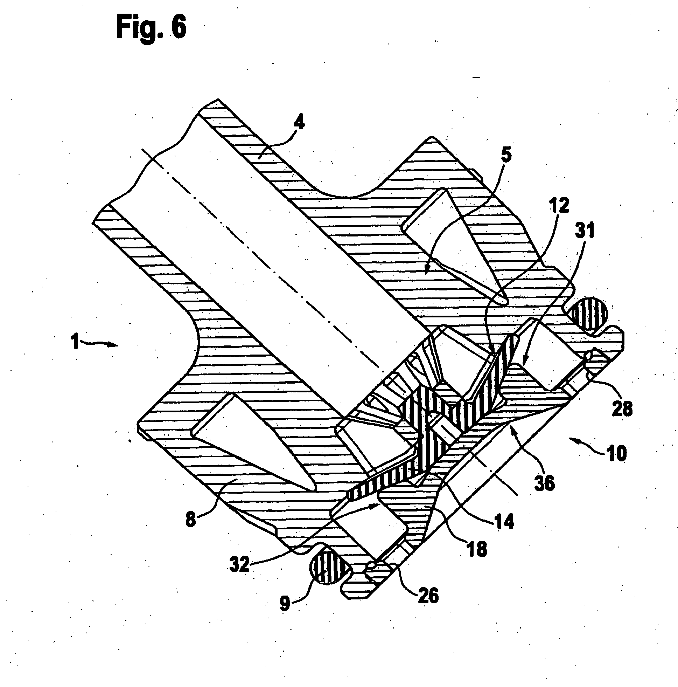

In den Figuren 1 und 6 ist ein Pumpenstutzen 1 in verschiedenen Ansichten dargestellt. Der Pumpenstutzen 1 gehört zu einer Vakuumpumpe, die zum Beispiel als Flügelzellenpumpe ausgeführt ist. Über den Pumpenstutzen 1 wird mit Hilfe der Vakuumpumpe Luft aus einem Bremskraftverstärker des Kraftfahrzeugs angesaugt, um in dem Bremskraftverstärker ein Vakuum beziehungsweise einen Unterdruck zu erzeugen. Daher wird die Vakuumpumpe auch als Unterdruckpumpe bezeichnet. Der Pumpenstutzen 1 wird auch als Saugstutzen bezeichnet.

Der Pumpenstutzen 1 umfasst einen rohrartigen Anschlusskörper 4, der einstückig mit einem Gehäusekörper 5 verbunden ist. Der Gehäusekörper 5 dient dazu, den Pumpenstutzen 1 in einer entsprechenden Öffnung der Vakuumpumpe zu befestigen. Zu diesem Zweck ist der Gehäusekörper 5 vorzugsweise mit mehreren Schnapphaken 8 versehen, die dazu dienen, den Pumpenstutzen 1 mit dem Gehäusekörper 5 in die Gehäuseöffnung der Vakuumpumpe einzuclipsen. Zur Abdichtung zwischen dem Gehäusekörper 5 und der Gehäuseöffnung der Vakuumpumpe dient ein O-Ring 9, der in einer Ringnut des Gehäusekörpers 5 aufgenommen ist.

Die durch die Vakuumpumpe angesaugte Luft gelangt durch den Anschlusskörper 4 des Pumpenstutzens 1 über ein Rückschlagventil 10 in das Innere der Vakuumpumpe. Das Rückschlagventil 10 verhindert, dass angesaugte Luft durch den Anschlusskörper 4 wieder zurück in den Bremskraftverstärker gelangt. Das Rückschlagventil 10 umfasst eine Ventilmembran 12, die einen Schließkörper 14 darstellt. Der Schließkörper 14 wirkt mit einem Ventilkörper 16 zusammen, der als Ventildeckel 18 ausgeführt ist.

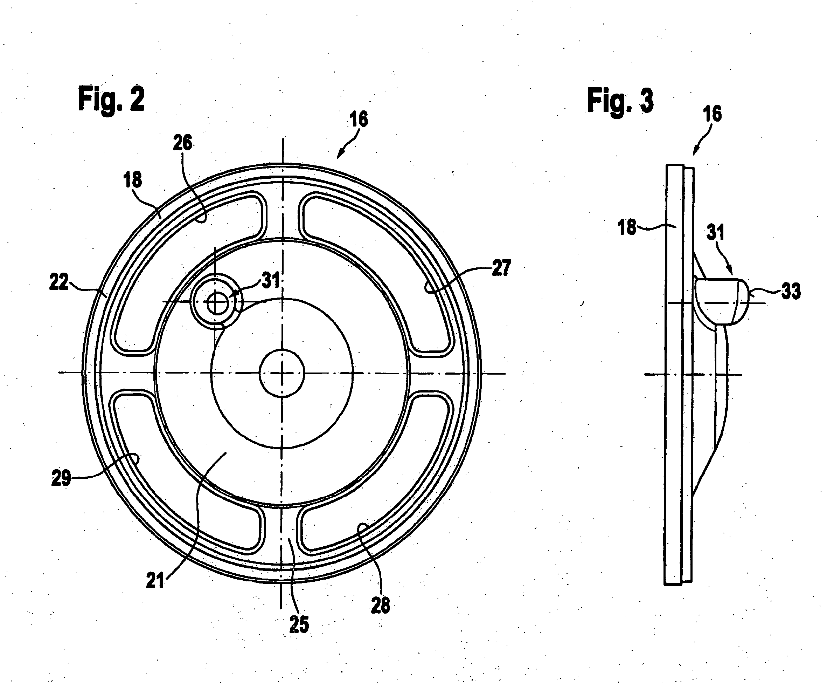

In den Figuren 2 und 3 ist der Ventilkörper 16 allein in zwei verschiedenen Ansichten dargestellt. Der Ventilkörper 16 umfasst einen Ventildeckel 18 mit einem Innenringkörper 21 und einem Außenringkörper 22. Die beiden Ringkörper 21 und 22 sind über radial verlaufende Stege 25 einstückig miteinander verbunden. In Umfangsrichtung zwischen den Stegen 25 und in radialer Richtung zwischen den beiden Ringkörpern 21, 22 sind vier kreisbogenförmige Langlöcher 26, 27, 28, 29 ausgespart. Die Langlöcher 26 bis 29 ermöglichen den Durchtritt eines Arbeitsmediums, insbesondere von Luft, die durch den Pumpenstutzen 1 in die Vakuumpumpe angesaugt wird.

In Figur 6 ist das Rückschlagventil 10 im eingebauten Zustand dargestellt. Der Schließkörper 14 ist in seiner dargestellten Schließstellung durch seine Gestalt und/oder durch den Ventilkörper 16 so gegen den Gehäusekörper 5 vorgespannt, dass ein unerwünschter Durchtritt des Mediums durch den Anschlusskörper 4 in den Bremskraftverstärker verhindert wird. Wenn der Schließkörper 14 von dem Gehäusekörper 5 abhebt und seine Öffnungsstellung einnimmt, dann wird eine Verbindung zwischen dem Anschlusskörper 4 und der Vakuumpumpe freigegeben, um ein weiteres Ansaugen von Luft aus dem Bremskraftverstärker in die Vakuumpumpe zu ermöglichen.

Im Rahmen der vorliegen Erfindung wurde festgestellt, dass die den Schließkörper 14 darstellende Ventilmembran 12, die vorzugsweise aus einem elastischen Kunststoffmaterial gebildet ist, in ihrer Öffnungsstellung und beim Ansaugen von Luft zu Schwingungen angeregt wird, die bei einer bestimmten Schwingungsamplitude zu einer unerwünschten Geräuschentwicklung führen. Eine daraus resultierende Resonanzgeräuschentwicklung im Bremskraftverstärker kann besonders störend sein.

Zur Dämpfung der Schwingungsamplitude der Ventilmembran 12 ist an dem Ventildeckel 18 mindestens ein Klemmvorsprung 31, 32 vorgesehen, der dazu dient, den Schließkörper 14 in seiner Öffnungsstellung und in seiner Schließstellung zwischen dem Ventilkörper 16 und dem Gehäusekörper 5 einzuklemmen. Durch dieses Einklemmen der Ventilmembran 12 kann die störende Geräuschfrequenz verschoben und der zugehörige Schalldruckpegel reduziert werden.

In Figur 2 sieht man, dass radial innerhalb des Langlochs 26 an dem Innenringkörper 21 ein Klemmvorsprung 31 ausgebildet ist. Der Klemmvorsprung 31 hat im Wesentlichen die Gestalt eines geraden Kreiszylinders, der einstückig mit dem Innenringkörper 21 des Ventildeckels 18 verbunden ist. An dem freien Ende des Klemmvorsprungs 31 ist eine Klemmfläche 33 ausgebildet, an welcher der Schließkörper 14 sowohl in seiner Öffnungsstellung als auch in seiner Schließstellung anliegt.

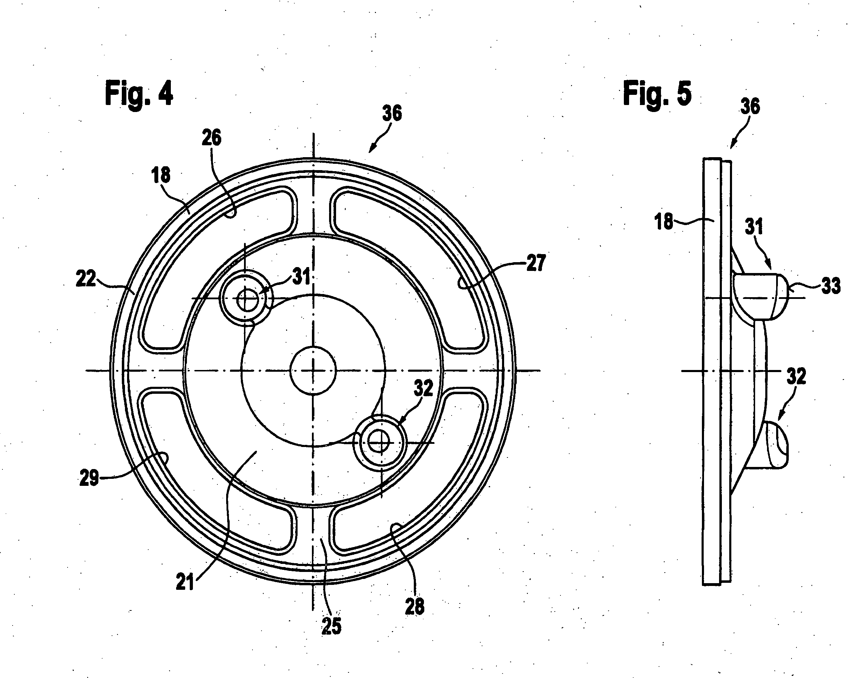

In den Figuren 4 und 5 ist ein Ventilkörper 36 dargestellt, der zwei Klemmvorsprünge 31, 32 aufweist, die diametral angeordnet sind. Der Klemmvorsprung 31 ist, wie bei dem vorangegangenen Ausführungsbeispiel, radial innerhalb und etwa mittig zu dem Langloch 26 angeordnet. Analog ist der Klemmvorsprung 32 radial innerhalb des Langlochs 28 und, in Umfangsrichtung betrachtet, in der Mitte von dem Langloch 28 angeordnet. Durch den Klemmvorsprung 31 beziehungsweise die beiden Klemmvorsprünge 31, 32 wird die Ventilmembran 12 sowohl in ihrer Schließstellung als auch in ihrer Öffnungsstellung zwischen dem Ventildeckel 18 und dem Gehäusekörper 5 eingeklemmt.

Durch das Einklemmen wird die Ventilmembran 12 an einer beziehungsweise an zwei Stellen fixiert, wodurch die Bewegungsfreiheit der Ventilmembran 12 eingeschränkt wird. Dabei ist der Klemmvorsprung 31 beziehungsweise sind die Klemmvorsprünge 31, 32 so angeordnet, dass die Ventilmembran 12 beim Öffnen eine in Umfangsrichtung unebene Gestalt oder Form einnimmt. Dabei wird die Schwingungsamplitude der Ventilmembran 12 insbesondere lokal im Bereich der Fixierung herabgesetzt.

### Bezugszeichenliste

- 1: Pumpenstutzen
- 4: Anschlusskörper
- 5: Gehäusekörper
- 8: Schnapphaken
- 9: O-Ring
- 10: Rückschlagventil
- 12: Ventilmembran
- 14: Schließkörper
- 16: Ventilkörper
- 18: Ventildeckel
- 21: Innenringkörper
- 22: Außenringkörper
- 25: Steg
- 26: Langloch
- 27: Langloch
- 28: Langloch
- 29: Langloch
- 31: Klemmvorsprung
- 32: Klemmvorsprung
- 33: Klemmfläche
- 36: Ventilkörper

## Patentansprüche

1. Rückschlagventil mit einer Ventilmembran (12), die einen schirmartigen Schließkörper (14) umfasst, der in einer Schließstellung so an einem Gehäusekörper (5) anliegt, dass der Schließkörper (14) einen Mediumdurchtritt durch in dem Ventilkörper (16;36) vorgesehene Durchgangslöcher verhindert, wobei der Schließkörper (14) in einer Öffnungsstellung von dem Gehäusekörper (5) abhebt, um den Durchtritt eines Mediums durch die Durchgangslöcher zu ermöglichen, wobei der Schließkörper (14) in der Öffnungsstellung und/oder Schließstellung an mindestens einer Stelle zwischen dem Ventilkörper (16;36) und dem Gehäusekörper (5) eingeklemmt ist, wobei an dem Ventilkörper (16;36) zusätzlich mindestens ein Klemmvorsprung (31,32) vorgesehen ist, an dem eine zusätzliche Klemmfläche (33) für den Schließkörper (14) ausgebildet ist, an welcher der Schließkörper (14) sowohl in seiner Öffnungsstellung als auch in seiner Schließstellung anliegt **dadurch gekennzeichnet, dass** der Schließkörper (14) in der Öffnungsstellung und/oder Schließstellung durch den Klemmvorsprung (31; 32) so zwischen dem Ventilkörper (16;36) und dem Gehäusekörper (5) eingeklemmt ist, dass der Schließkörper (14) in der Öffnungsstellung eine in Umfangsrichtung unebene Gestalt einnimmt.

2. Rückschlagventil nach Anspruch 1, **dadurch gekennzeichnet, dass** der Schließkörper (14) in der Öffnungsstellung und/oder Schließstellung so zwischen dem Ventilkörper (16;36) und dem Gehäusekörper (5) eingeklemmt ist, dass die Schwingungsamplitude des Schließkörpers (14) in der Öffnungsstellung insbesondere lokal herabgesetzt wird.

3. Rückschlagventil nach Anspruch 1 bis 2, **dadurch gekennzeichnet, dass** der Klemmvorsprung (31,32) einstückig mit dem Ventilkörper (16;36) verbunden ist.

4. Rückschlagventil nach Anspruch 1 bis 3, **dadurch gekennzeichnet, dass** der Ventilkörper (16;36) mit dem Klemmvorsprung (31,32) als Spritzgussteil aus Kunststoff gebildet ist.

5. Rückschlagventil nach Anspruch 1 bis 4, **dadurch gekennzeichnet, dass** der Ventilkörper (16;36) radial außerhalb des Klemmvorsprungs (31,32) ein Langloch (26,28) aufweist.

6. Rückschlagventil nach Anspruch 5, **dadurch gekennzeichnet, dass** das Langloch (26,28) die Gestalt eines Kreisbogens aufweist.

7. Pumpenstutzen (1) mit einem Rückschlagventil (10) nach einem der vorhergehenden Ansprüche.

8. Vakuumpumpe, insbesondere zum Erzeugen eines Unterdrucks in einem Bremskraftverstärker eines Kraftfahrzeugs, mit einem Pumpenstutzen (1) nach Anspruch 7.

## Claims

1. Check valve having a valve diaphragm (12) which comprises an umbrella-like closing body (14) which, in a closed position, bears against a housing body (5) in such a way that the closing body (14) prevents a passage of medium through through holes which are provided in the valve body (16; 36), the closing body (14) lifting up from the housing body (5) in an open position, in order to make the passage of a medium through the through holes possible, the closing body (14) being clamped in between the valve body (16; 36) and the housing body (5) at at least one location in the open and/or closed position, at least one clamping projection (31, 32) additionally being provided on the valve body (16; 36), on which clamping projection (31, 32) an additional clamping face (33) for the closing body (14) is configured, against which additional clamping face (33) the closing body (14) bears both in its open position and in its closed position, **characterized in that**, in the open position and/or closed position, the closing body (14) is clamped in between the valve body (16; 36) and the housing body (5) by the clamping projection (31; 32) in such a way that the closing body (14) assumes a design which is non-flat in the circumferential direction in the open position.

2. Check valve according to Claim 1, **characterized in that**, in the open position and/or closed position, the closing body (14) is clamped in between the valve body (16; 36) and the housing body (5) in such a way that the vibration amplitude of the closing body (14) is reduced in the open position, in particular locally.

3. Check valve according to Claims 1 and 2, **characterized in that** the clamping projection (31, 32) is connected integrally to the valve body (16; 36).

4. Check valve according to Claims 1 to 3, **characterized in that** the valve body (16; 36) is formed with the clamping projection (31, 32) as an injection moulded part made from plastic.

5. Check valve according to Claims 1 to 4, **characterized in that** the valve body (16; 36) has a slot (26, 28) radially outside the clamping projection (31, 32).

6. Check valve according to Claim 5, **characterized in that** the slot (26, 28) has the design of a circular arc.

7. Pump port (1) having a check valve (10) according to one of the preceding claims.

8. Vacuum pump, in particular for generating a vacuum in a brake booster of a motor vehicle, having a pump port (1) according to Claim 7.

## Revendications

1. Soupape de retenue comprenant une membrane de soupape (12) qui comprend un corps de fermeture en forme de parapluie (14) qui s'applique dans une position de fermeture contre un corps de boîtier (5) de telle sorte que le corps de fermeture (14) empêche le passage d'un fluide à travers des trous de passage prévus dans le corps de soupape (16 ; 36), le corps de fermeture (14) se soulevant du corps de boîtier (5) dans une position d'ouverture afin de permettre le passage d'un fluide à travers les trous de passage, le corps de fermeture (14) étant serré dans la position d'ouverture et/ou dans la position de fermeture au niveau d'au moins un emplacement entre le corps de soupape (16 ; 36) et le corps de boîtier (5), au moins une saillie de serrage (31, 32) étant en outre prévue au niveau du corps de soupape (16 ; 36), au niveau de laquelle est réalisée une surface de serrage supplémentaire (33) pour le corps de fermeture (14), contre laquelle le corps de fermeture (14) s'applique à la fois dans sa position d'ouverture et dans sa position de fermeture, **caractérisée en ce que** le corps de fermeture (14), dans la position d'ouverture et/ou dans la position de fermeture, est serré par la saillie de serrage (31 ; 32) entre le corps de soupape (16 ; 36) et le corps de boîtier (5) de telle sorte que le corps de fermeture (14) adopte, dans la position d'ouverture, une configuration non plane dans la direction périphérique.

2. Soupape de retenue selon la revendication 1, **caractérisée en ce que** le corps de fermeture (14), dans la position d'ouverture et/ou dans la position de fermeture, est serré entre le corps de soupape (16 ; 36) et le corps de boîtier (5) de telle sorte que l'amplitude d'oscillation du corps de fermeture (14) dans la position d'ouverture soit notamment réduite localement.

3. Soupape de retenue selon les revendications 1 à 2, **caractérisée en ce que** la saillie de serrage (31, 32) est connectée d'une seule pièce au corps de soupape (16 ; 36).

4. Soupape de retenue selon les revendications 1 à 3, **caractérisée en ce que** le corps de soupape (16 ; 36) avec la saillie de serrage (31, 32) est réalisé sous forme de pièce moulée par injection en plastique.

5. Soupape de retenue selon les revendications 1 à 4, **caractérisée en ce que** le corps de soupape (16 ; 36) présente radialement à l'extérieur de la saillie de serrage (31, 32) un trou oblong (26, 28).

6. Soupape de retenue selon la revendication 5, **caractérisée en ce que** le trou oblong (26, 28) présente la forme d'un arc de cercle.

7. Raccord de pompe (1) comprenant une soupape de retenue (10) selon l'une quelconque des revendications précédentes.

8. Pompe à vide en particulier pour produire une dépression dans un servofrein d'un véhicule automobile, comprenant un raccord de pompe (1) selon la revendication 7.
